(19) Europäisches Patentamt
European Patent Office
Office européen des brevets

(11) EP 3 798 248 B1

(12) **EUROPEAN PATENT SPECIFICATION**

(45) Date of publication and mention of the grant of the patent:
**05.07.2023 Bulletin 2023/27**

(21) Application number: **19807602.8**

(22) Date of filing: **20.05.2019**

(51) International Patent Classification (IPC):
***C08G 64/02*** *(2006.01)*

(52) Cooperative Patent Classification (CPC):
**C08G 64/0208; C08G 64/305**

(86) International application number:
**PCT/JP2019/019892**

(87) International publication number:
**WO 2019/225540 (28.11.2019 Gazette 2019/48)**

(54) **POLYCARBONATE DIOL**

POLYCARBONATDIOL

DIOL DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2018 JP 2018097385**

(43) Date of publication of application:
**31.03.2021 Bulletin 2021/13**

(73) Proprietor: **Asahi Kasei Kabushiki Kaisha**
**Tokyo 100-0006 (JP)**

(72) Inventor: **KAWAI, Yasufumi**
**Tokyo 100-0006 (JP)**

(74) Representative: **Strehl Schübel-Hopf & Partner**
**Maximilianstrasse 54**
**80538 München (DE)**

(56) References cited:
**WO-A1-01/90213**
**WO-A1-01/90213**
**WO-A1-02/070584**
**WO-A1-02/070584**
**WO-A1-2009/063767**
**JP-A- H0 551 428**
**JP-A- H0 551 428**
**JP-A- 2018 053 266**
**JP-A- 2018 053 266**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 798 248 B1

## Description

### Technical Field

The present invention relates to a polycarbonate diol.

### Background Art

It has heretofore been proposed that polycarbonate diols which can impart excellent heat resistance, weather resistance, hydrolysis resistance, oil resistance, and chemical resistance, are used as soft segments used, for example, for polyurethanes or thermoplastic elastomers such as urethane-based thermoplastic elastomers, ester-based thermoplastic elastomers, and amide-based thermoplastic elastomers.

As such polycarbonate diols, polycarbonate diols containing 1,6-hexanediol alone as a diol component are commonly used. However, since such polycarbonate diols are crystalline, the polycarbonate diols are solid at normal temperature, and has a problem of difficulty in handling.

To solve these problems, the production of polycarbonate diols using two or more diols has been proposed. For example, Patent Document 1 discloses a polycarbonate diol containing 1,4-butanediol and 1,6-hexanediol as diol components.

### List of Prior Art Documents

### Patent Document

Patent Document 1: Japanese Patent No. 5123950

JP H05 51428 A discloses polyurethanes comprising a polyol, polyisocyanate and a chain extender, wherein the polymeric polyol contains aliphatic polycarbonatediols.

### Summary of Invention

### Problems to be Solved by Invention

However, a polycarbonate diol is often a solid or a viscous liquid at normal temperature. Therefore, a polycarbonate diol may be stored at high temperature to improve handleability. In this case, the following problem exists: the reactivity of a polycarbonate diol immediately after production changes over time when the polycarbonate diol is stored at high temperature. In addition, even the polycarbonate diol described in the above-mentioned Patent Document 1 leaves room for improvement in stability during storage at high temperature.

Then, an object of the present invention is to provide a polycarbonate diol excellent in stability during storage at high temperature.

### Means for Solving Problems

The present inventor has repeated examination earnestly to solve the above-mentioned problem, consequently found that a polycarbonate diol having a specific structure is excellent in stability during storage at high temperature, and completed the present invention.

The present invention is defined in the claims.

### Advantages of Invention

According to the present invention, a polycarbonate diol excellent in stability during storage at high temperature can be provided.

### Mode for Carrying Out Invention

Hereinafter, the mode for carrying out the present invention (hereinafter, referred to as the "present embodiment") will be described in detail.

[Polycarbonate diol]

A polycarbonate diol of the present embodiment has a polycarbonate diol of a first embodiment and a polycarbonate diol of a second embodiment.

[Polycarbonate diol of first embodiment]

The polycarbonate diol of the first embodiment is a polycarbonate diol, comprising a repeating unit represented by the following formula (A) and a terminal hydroxyl group, wherein 90 to 100 mol% of the repeating units represented by formula (A) are repeating units represented by the following formula (B) and/or (C), the amount of the repeating units represented by formula (B) is 10 to 90 mol% based on the total repeating units represented by formula (A), 90 mol% or more of the total amount of terminal groups is terminal groups represented by the following formula (B-E) and/or (C-E), and the polycarbonate diol satisfies the following expression (i).

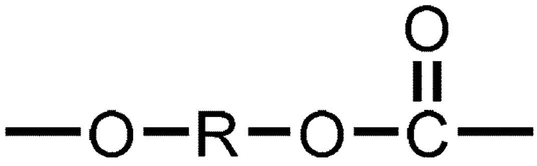

· · · (A)

wherein R represents a divalent aliphatic or alicyclic hydrocarbon having 2 to 15 carbon atoms.

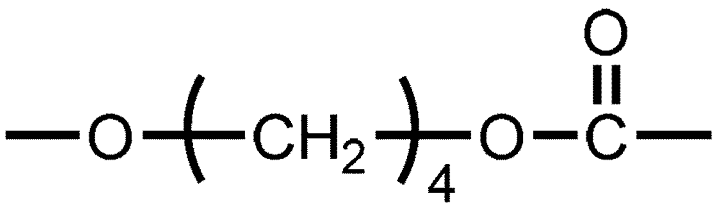

· · · (B)

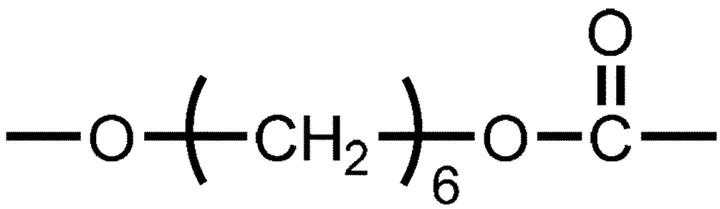

· · · (C)

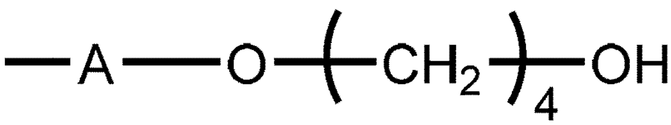

· · · (B−E)

wherein A means formula (A).

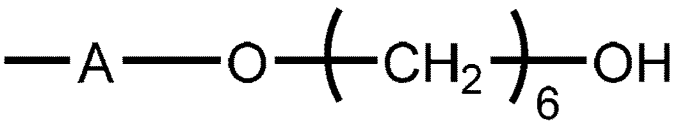

· · · (C−E)

wherein A means formula (A).

((C-E)/(B-E) calculated by NMR) > (alkali hydrolysis HDL/BDL) ... (i)

wherein (C-E)/(B-E) calculated by NMR is a molar ratio between the terminal groups represented by formula (C-E) and the terminal groups represented by formula (B-E) measured by nuclear magnetic resonance (NMR), and alkali hydrolysis HDL/BDL is a molar ratio between 1,6-hexanediol (HDL) and 1,4-butanediol (BDL) obtained by the alkali hydrolysis of the polycarbonate diol.

In the present embodiment, the amounts of the terminal groups represented by formula (C-E) and formula (B-E) and the amounts of 1,6-hexanediol (HDL) and 1,4-butanediol (BDL) in the alkali hydrolysate can be measured by the method described in the below-mentioned Examples.

The amount of the repeating units represented by formula (B) in the polycarbonate diol of the first embodiment is 10 to 90 mol%, preferably 30 to 80 mol%, more preferably 30 to 70 mol%, and further preferably 40 to 60 mol% based on the total repeating units represented by formula (A). When the ratio is 10 mol% or more and 90 mol% or less, the obtained polycarbonate diol becomes liquid, and is excellent in handleability. Moreover, 90 mol% or more of the total amount of the terminal groups in the polycarbonate diol of the first embodiment is terminal groups represented by formula (B-E) and/or (C-E), and the polycarbonate diol of the first embodiment is excellent in stability during storage at high temperature by satisfying expression (i).

(Alkali hydrolysis HDL/BDL)

The alkali hydrolysis HDL/BDL is a molar ratio (HDL/BDL) between 1,6-hexanediol (HDL) and 1,4-butanediol (BDL) obtained by the alkali hydrolysis of the polycarbonate diol. The range of the alkali hydrolysis HDL/BDL is preferably 1/9 to 9/1, more preferably 2/8 to 7/3, further preferably 2/8 to 6/4, and particularly preferably 4/6 to 6/4.

((C-E)/(B-E) calculated by NMR)

The (C-E)/(B-E) calculated by NMR is a molar ratio ((C-E)/(B-E)) between the terminal groups represented by formula (C-E) and the terminal groups represented by formula (B-E) measured by nuclear magnetic resonance (NMR) . The range of (C-E)/(B-E) calculated by NMR is preferably 9.00 to 0.10, more preferably 2.50 to 0.20, further preferably 2.0 to 0.20, and particularly preferably 2.0 to 0.5.

Although expression (i) is an expression which satisfies ((C-E)/(B-E) calculated by NMR) > (alkali hydrolysis HDL/BDL), the case where the following expression (ii) is satisfied is more preferable.

((C-E)/(B-E) calculated by NMR) - (alkali hydrolysis HDL/BDL) ≥ 0.001 ... (ii)

The "((C-E)/(B-E) calculated by NMR) - (alkali hydrolysis HDL/BDL)" in expression (ii) is preferably 0.005 or more, more preferably 0.01 or more, and further preferably 0.15 or more. Although the upper limit of the "((C-E)/(B-E) calculated by NMR) - (alkali hydrolysis HDL/BDL)" in expression (ii) is not particularly limited, the upper limit is, for example, 9 or less.

[Polycarbonate diol of second embodiment]

A polycarbonate diol of a second embodiment will be described hereinafter. The polycarbonate diol of the second embodiment is generalized from the polycarbonate diol of the above-mentioned first embodiment.

Specifically, the polycarbonate diol of the second embodiment is a polycarbonate diol, comprising a repeating unit represented by the following formula (A) and a terminal hydroxyl group, wherein the repeating units represented by formula (A) are repeating units represented by the following formulae (b) and (c), the amount of the repeating units represented by formula (b) is 10 to 60 mol% based on the total repeating units represented by formula (A), 90 mol% or more of the total amount of terminal groups is terminal groups represented by the following formula (b-e) and/or (c-e), and the polycarbonate diol satisfies the following expression (i-2) .

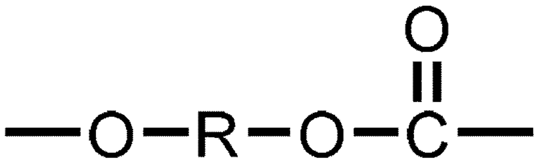 · · · (A)

wherein R represents a divalent aliphatic or alicyclic hydrocarbon having 2 to 15 carbon atoms.

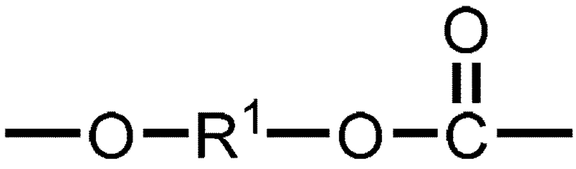 · · · (b)

wherein $R^1$ represents a divalent aliphatic or alicyclic hydrocarbon having 2 to 4 carbon atoms.

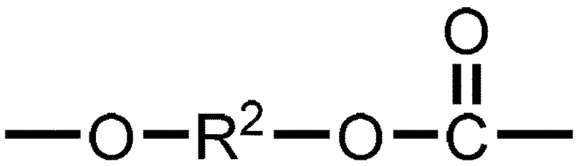 · · · (c)

wherein $R^2$ represents a divalent aliphatic or alicyclic hydrocarbon having 5 to 15 carbon atoms.

$-A-O-R^{11}-OH$ · · · (b-e)

wherein A means formula (A), and $R^{11}$ represents a divalent aliphatic or alicyclic hydrocarbon having 2 to 4 carbon atoms.

**$-A-O-R^{22}-OH$** · · · (c-e)

wherein A means formula (A), and $R^{22}$ represents a divalent aliphatic or alicyclic hydrocarbon having 5 to 15 carbon atoms.

((c-e)/(b-e) calculated by NMR) > (alkali hydrolysis HMD/LMD) ... (i-2)

wherein (c-e)/(b-e) calculated by NMR is a molar ratio between the terminal groups represented by formula (c-e) and the terminal groups represented by formula (b-e) measured by nuclear magnetic resonance (NMR), and alkali hydrolysis HMD/LMD is a molar ratio between an aliphatic or alicyclic diol having 5 to 15 carbon atoms (HMD) and an aliphatic or alicyclic diol having 2 to 4 carbon atoms (LMD) obtained by the alkali hydrolysis of the polycarbonate diol.

$R^1$ in formula (b) is preferably a divalent aliphatic hydrocarbon group having 2 to 4 carbon atoms, and $R^{11}$ in formula (b-e) is preferably a divalent aliphatic hydrocarbon group having 2 to 4 carbon atoms. $R^2$ in formula (c) is preferably a divalent aliphatic hydrocarbon group having 6 to 10 carbon atoms, and $R^{22}$ in formula (c-e) is preferably a divalent aliphatic hydrocarbon group having 6 to 10 carbon atoms.

In expression (i-2), examples of the aliphatic or alicyclic diol having 5 to 15 carbon atoms (HMD) include, but are not particularly limited to, 1,5-pentanediol, 1,6-hexanediol, 1,7-heptanediol, 1,8-octanediol, 1,9-nonanediol, 1,10-decanediol, 1,11-undecanediol, 1,12-dodecanediol, 2-methyl-1,8-octanediol, 2-ethyl-1,6-hexanediol, 3-methyl-1,5-pentanediol, 2,4-dimethyl-1,5-pentanediol, 2,4-diethyl-1,5-pentanediol, 1,3-cyclohexanediol, 1,4-cyclohexanediol, 1,4-cyclohexanedimethanol, and 2-bis(4-hydroxycyclohexyl)-propane.

In expression (i-2), examples of the aliphatic or alicyclic diol having 2 to 4 carbon atoms (LMD) include, but are

not particularly limited to, ethylene glycol, 1,3-propanediol, 1,4-butanediol, and 2-methyl-1,3-propanediol.

In the present embodiment, the amounts of the terminal groups represented by formula (c-e) and formula (b-e) and the amounts of HMD and LMD in the alkali hydrolysate can be measured by the method described in the below-mentioned Examples.

The amount of the repeating units represented by formula (b) in the polycarbonate diol of the present embodiment is 10 to 60 mol%, preferably 30 to 80 mol%, more preferably 30 to 70 mol%, and further preferably 40 to 60 mol% based on the total repeating units represented by formula (A). When the ratio is 10 mol% or more and 90 mol% or less, the obtained polycarbonate diol becomes liquid, and is excellent in handleability. Moreover, 90 mol% or more of the total amount of the terminal groups in the polycarbonate diol of the present embodiment is terminal groups represented by formula (b-e) and/or (c-e), and the polycarbonate diol of the present embodiment is excellent in stability during storage at high temperature by satisfying expression (i-2).

(Alkali hydrolysis HMD/LMD)

The alkali hydrolysis HMD/LMD is a molar ratio (HMD/LMD) between a divalent aliphatic or alicyclic diol having 5 to 15 carbon atoms (HMD) and a divalent aliphatic or alicyclic diol having 2 to 4 carbon atoms (LMD) obtained by the alkali hydrolysis of the polycarbonate diol. The range of the alkali hydrolysis HMD/LMD is preferably 1/9 to 9/1, more preferably 2/8 to 7/3, further preferably 2/8 to 6/4, and particularly preferably 4/6 to 6/4.

((c-e)/(b-e) calculated by NMR)

The (c-e)/(b-e) calculated by NMR is a molar ratio ((c-e)/(b-e)) between the terminal groups represented by formula (c-e) and the terminal groups represented by formula (b-e) measured by nuclear magnetic resonance (NMR) . The range of the (c-e)/(b-e) calculated by NMR is preferably 9.00 to 0.10, more preferably 2.50 to 0.20, further preferably 2.0 to 0.20, and particularly preferably 2.0 to 0.5.

Although expression (i-2) is an expression which satisfies ((c-e)/(b-e) calculated by NMR) > (alkali hydrolysis HMD/LMD), the case where the following expression (ii-2) is satisfied is more preferable.

$$((c\text{-}e)/(b\text{-}e)\ \text{calculated by NMR}) - (\text{alkali hydrolysis HMD/LMD}) \geq 0.001 \quad \ldots \quad (ii\text{-}2)$$

The "((c-e)/(b-e) calculated by NMR) - (alkali hydrolysis HMD/LMD)" in expression (ii-2) is preferably 0.005 or more, more preferably 0.01 or more, and further preferably 0.15 or more. Although the upper limit of the "((c-e)/(b-e) calculated by NMR) - (alkali hydrolysis HMD/LMD)" in expression (ii-2) is not particularly limited, the upper limit is, for example, 9 or less.

[Number-average molecular weight]

The number-average molecular weight of the polycarbonate diol of the present embodiment is preferably 300 or larger and 10000 or smaller, more preferably 400 or larger and 5000 or smaller, and further preferably 500 or larger and 3000 or smaller.

When the number-average molecular weight is equal to or more than the lower limit value described above, the flexibleness and the low-temperature characteristic of a thermoplastic urethane obtained from the polycarbonate diol tend to be more favorable. Meanwhile, when the number-average molecular weight is equal to or less than the upper limit value described above, the molding processability of a thermoplastic urethane obtained from the polycarbonate diol tends to be more favorable.

In the present embodiment, the number-average molecular weight of a polycarbonate diol can be calculated from the hydroxy value of the polycarbonate diol using the method described in the below-mentioned Examples.

Subsequently, details of the repeating unit (also described as a "polycarbonate structure") represented by formula (A) will be described hereinafter.

R is a divalent aliphatic or alicyclic hydrocarbon having 2 to 15 carbon atoms in the polycarbonate structure represented by formula (A). A plurality of R moieties may be mutually the same or different.

The divalent linear aliphatic hydrocarbon group in R has 2 or more and 15 or less carbon atoms, preferably 3 or more and 12 or less carbon atoms, and more preferably 4 or more and 10 or less carbon atoms.

Specific examples of the divalent linear aliphatic hydrocarbon group having 2 or more and 15 or less carbon atoms in R include, but are not particularly limited to, an ethylene group, a trimethylene group, a tetramethylene group,

a pentamethylene group, a hexamethylene group, a heptylene group, and an octylene group. Among others, a trimethylene group, a butylene group, a pentylene group, or a hexylene group is preferable from the viewpoint of versatility.

The divalent branched aliphatic hydrocarbon group in R has 3 or more and 15 or less carbon atoms, preferably 3 or more and 12 or less carbon atoms, and more preferably 3 or more and 10 or less carbon atoms.

Specific examples of the divalent branched aliphatic hydrocarbon group in R include, but are not particularly limited to, an isopropylene group, an isobutylene group, a tert-butylene group, an isopentylene group, a 2,2-dimethyl trimethylene group, an isohexylene group, an isoheptylene group, and an isooctylene group. Among others, an isopentylene group or an isohexylene group is preferable from the viewpoint of versatility.

The divalent cyclic aliphatic hydrocarbon group in R has 3 or more and 15 or less carbon atoms, preferably 6 or more and 15 or less carbon atoms, and more preferably 6 or more and 10 or less carbon atoms.

Specific examples of the divalent cyclic aliphatic hydrocarbon group in R include, but are not particularly limited to, a cyclobutylene group, a cyclopentylene group, a cyclohexylene group, and a cycloheptylene group. Among others, the cyclopentylene group or the cyclohexylene group is preferable from the viewpoint of versatility.

Among others, as R, the divalent linear aliphatic hydrocarbon group having 2 or more and 10 or less carbon atoms or the divalent branched aliphatic hydrocarbon group having 3 or more and 10 or less carbon atoms is preferable, and the divalent linear aliphatic hydrocarbon group having 3 or more and 10 or less carbon atoms is more preferable.

[Method for producing polycarbonate diol]

The polycarbonate diol of the present embodiment can be obtained, for example, by reacting a carbonate compound and a diol compound in the presence of a transesterification catalyst.

(Carbonate compound)

Examples of the carbonate compound for use in the production of the polycarbonate diol of the present embodiment include, but are not limited to, alkylene carbonates, dialkyl carbonates, and diaryl carbonates.

Examples of the alkylene carbonates include, but are not particularly limited to, ethylene carbonate, trimethylene carbonate, 1,2-propylene carbonate, 1,2-butylene carbonate, 1,3-butylene carbonate, and 1,2-pentylene carbonate.

Examples of the dialkyl carbonates include, but are not particularly limited to, dimethyl carbonate, diethyl carbonate, dipropyl carbonate, and dibutyl carbonate.

Examples of the diaryl carbonates include, but are not particularly limited to, diphenyl carbonate.

Among others, the carbonate compound for use in the production of the polycarbonate diol is preferably alkylene carbonate, and more preferably dimethyl carbonate and ethylene carbonate.

(Diol compound)

Examples of the diol compound for use in the production of the polycarbonate diol include, but are not limited to, linear diols, branched diols, cyclic diols, and diols having aromatic rings.

Examples of the linear diols include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.

Examples of the branched diols include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.

Examples of the cyclic diols include, but are not particularly limited to, 1,3-cyclohexanediol, 1,4-cyclohexanediol, 1,4-cyclohexanedimethanol, and 2-bis(4-hydroxycyclohexyl)-propane.

[Production conditions for polycarbonate diol]

For the production of the polycarbonate diol of the present embodiment, a transesterification reaction catalyst can be used.

Examples of the transesterification reaction catalyst include, but are not particularly limited to, alkali metals and alkaline earth metals, and alcoholates thereof, hydrides thereof, oxides thereof, amides thereof, hydroxides thereof, and salts thereof.

Examples of the salts of the alkali metal and the alkaline earth metal include, but are not particularly limited to, carbonate, nitrogen-containing borate, and basic salts with organic acids.

Examples of the alkali metal include, but are not particularly limited to, lithium, sodium, and potassium.

Examples of the alkaline earth metal include, but are not particularly limited to, magnesium, calcium, strontium,

and barium.

Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.

Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.

One of these transesterification catalysts can be used alone, or two or more thereof can be used in combination.

Among others, the transesterification reaction catalyst is preferably at least one metal selected from the group consisting of sodium, potassium, magnesium, potassium, titanium, zirconium, tin, lead, and ytterbium, or a salt thereof, an alkoxide thereof, or an organic compound containing the metal, because transesterification reaction to obtain the polycarbonate diol is more favorably performed, and use of the resulting polycarbonate diol has less influence on urethane reaction.

The transesterification reaction catalyst is more preferably at least one metal selected from the group consisting of magnesium, titanium, ytterbium, tin, and zirconium.

Specific examples of the preferred transesterification catalyst include organic compounds of lead and organic compounds of titanium.

Examples of the organic compounds of lead include, but are not particularly limited to, lead acetate trihydrate, tetraphenyl lead, and lead stearate.

Examples of the organic compounds of titanium include, but are not particularly limited to, titanium tetra-n-butoxide, titanium tetra-n-propoxide, and titanium tetraisopropoxide.

The amount of the transesterification reaction catalyst used is preferably 0.00001% by mass or more and 0.1% by mass or less, more preferably 0.0001% by mass or more and 0.05% by mass or less, based on the total mass of the starting materials.

The transesterification catalyst used in transesterification reaction is not consumed by the transesterification reaction when heat treatment is performed subsequently to the production of the polycarbonate diol. Therefore, its amount can be calculated on the basis of the amount of the transesterification reaction catalyst used. In the case of using, for example, commercially available polycarbonate diol, the amount of a metal of the transesterification reaction catalyst contained in the polycarbonate diol is determined by ICP (inductively coupled plasma) measurement.

The polycarbonate diol of the present embodiment can also be produced by the transesterification reaction of a polycarbonate diol and a diol compound, or two or more polycarbonate diols.

When the starting material polycarbonate diol contains a catalyst poison for the transesterification reaction catalyst, etc. used in the production thereof, the transesterification reaction usually tends to be less likely to progress. Hence, for the production of the polycarbonate diol, the transesterification reaction catalyst described above can be newly added in a necessary amount.

On the other hand, when the starting material polycarbonate diol contains no catalyst poison for the transesterification reaction catalyst, the transesterification reaction usually tends to be more likely to progress. However, also in the case of, for example, further lowering a reaction temperature or further shortening a reaction time in the process of producing the polycarbonate diol, the transesterification reaction catalyst can be newly added in a necessary amount. In this case, the same transesterification reaction catalyst as that used in the production of the starting material polycarbonate diol can be adopted.

Specifically, the transesterification reaction can be carried out by mixing the starting materials, and stirring the mixture under heating.

The temperature of the transesterification reaction is not particularly limited and is preferably 120°C or higher and 250°C or lower, more preferably 140°C or higher and 200°C or lower.

When the reaction temperature is equal to or higher than the lower limit value described above, the transesterification reaction can be performed in a shorter time, leading to excellent cost efficiency. When the reaction temperature is equal to or lower than the upper limit value described above, the resulting polycarbonate diol can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The progression and completion of the transesterification reaction can be confirmed by GPC measurement. As the transesterification reaction progresses, a peak derived from the starting material is decreased over time, and the peak disappears. The progression and completion of the transesterification reaction can be confirmed thereby.

In the method for producing the polycarbonate diol, for example, a step of dehydrating the starting materials

used may be performed as pretreatment before the transesterification reaction described above.

In the method for producing the polycarbonate diol, for example, a step of adding the aforementioned catalyst poison for the transesterification reaction catalyst may be performed as aftertreatment after the transesterification reaction described above.

(Method for producing polycarbonate diol of first embodiment)

A method for producing the polycarbonate diol of the present embodiment includes a step of adjusting the terminal structure of the polycarbonate diol.

In the case of producing the polycarbonate diol of the first embodiment, this step may be either step of step (X) of reducing the terminal groups represented by formula (B-E) and step (Y) of increasing the terminal groups represented by formula (C-E). Specific examples of the method for adjustment include the following methods, and one of the following methods may be used alone, or two or more thereof may be used in combination. Thus, a polycarbonate diol which satisfies expression (i) can be prepared.

Step (X): a method for reducing the terminal groups represented by formula (B-E) by removing 1,4-butanediol from the ends of the carbonate diol preferentially by subjecting the resulting polycarbonate diol to condensation polymerization at reduced pressure and 180°C or higher and 250°C or lower.

Step (Y): a method for increasing the terminal groups represented by formula (C-E) by subjecting the resulting polycarbonate diol and 1,6-hexanediol or a polycarbonate diol in which 1,6-hexanediol is used alone to transesterification reaction.

A polycarbonate diol which satisfies expression (i) can be prepared also by optionally adjusting the types of starting materials, reaction temperature, reaction pressure, and reaction time besides steps (X) and (Y).

The ratios of the terminal groups represented by formula (B-E) and formula (C-E) to the total amount of the terminal groups can be calculated by $^1$H-NMR. More specifically, the ratios can be measured by the method described in the below-mentioned Examples.

(Method for producing polycarbonate diol of second embodiment)

A method for producing the polycarbonate diol of the present embodiment includes a step of adjusting the terminal structure of the polycarbonate diol.

In the case of producing the polycarbonate diol of the second embodiment, this step may be either step of step (x) of reducing the terminal groups represented by formula (b-e) and step (y) of increasing the terminal groups represented by formula (c-e). Specific examples of the method for adjustment include the following methods, and one of the following methods may be used alone, or two or more thereof may be used in combination. Thus, a polycarbonate diol which satisfies expression (i-2) can be prepared.

Step (x): a method for reducing the terminal groups represented by formula (b-e) by removing a divalent aliphatic or alicyclic diol having 2 to 4 carbon atoms (hereinafter also described as an "LMD") from the ends of the carbonate diol preferentially by subjecting the resulting polycarbonate diol to condensation polymerization at reduced pressure and 180°C or higher and 250°C or lower. Examples of the method for removing the LMD from the ends of the carbonate diol preferentially include, but are not particularly limited to, a method for raising the temperature to a temperature 80°C or more higher than the boiling point of the LMD at reduced pressure to perform polymerization reaction.

Step (y): a method for increasing the terminal groups represented by formula (c-e) by subjecting the resulting polycarbonate diol and a divalent aliphatic or alicyclic diol having 5 to 15 carbon atoms (HMD) or a polycarbonate diol in which a divalent aliphatic or alicyclic diol having 5 to 15 carbon atoms (HMD) is used alone or used for copolymerization to transesterification reaction.

A polycarbonate diol which satisfies expression (i-2) can be prepared also by optionally adjusting the types of starting materials, reaction temperature, reaction pressure, and reaction time besides steps (x) and (y).

The ratios of the terminal groups represented by formula (b-e) and formula (c-e) to the total amount of the terminal groups can be calculated by $^1$H-NMR. More specifically, the ratios can be measured by the method described in the below-mentioned Examples.

[Method for storing polycarbonate diol]

A storing method of the present embodiment is a method for storing the above-mentioned polycarbonate diol, and the polycarbonate diol is preserved in a fluidic state. When the polycarbonate diol is preserved in a fluidic state, the polycarbonate diol is excellent in handleability. Examples of the method for preservation wherein "the polycarbonate diol is preserved in a fluidic state" include, but are not particularly limited to, warming the polycarbonate diol to a temperature at which the polycarbonate diol is fluidized or maintaining the polycarbonate diol at the temperature to store

the polycarbonate diol. The warming or storing temperature of the polycarbonate diol is preferably 50°C or higher, more preferably 55°C or higher, and further preferably 60°C or higher. Although the upper limit of the temperature is not particularly limited, the upper limit is preferably 180°C or lower, more preferably 150°C or lower, and further preferably 120°C or lower from the viewpoint of suppressing the decomposition of the polycarbonate diol.

Examples

Hereinafter, the present embodiment will be described further specifically with reference to specific Examples and Comparative Examples. Evaluation and physical properties in Examples and Comparative Examples mentioned later were evaluated and determined by the methods given below. In the present Examples, the terms "parts" and "%" are based on mass, unless otherwise specified.

(Measurement of number-average molecular weight)

The number-average molecular weight was determined from a hydroxy value as mentioned later.

(Measurement of hydroxy value)

The hydroxy value was measured by the following method.

A volumetric flask was used, and pyridine was added to 12.5 g of acetic anhydride so as to bring the amount to 50 mL, to prepare an acetylation reagent. In a 100 mL eggplant-shaped flask, 2.5 to 5.0 g of a sample was weighed and placed. To the eggplant-shaped flask, 5 mL of the acetylation reagent and 10 mL of toluene were added with a whole pipette. Then, a condenser was attached to the flask, and the mixture was stirred and heated at 100°C for 1 hour. To the eggplant-shaped flask, 2.5 mL of distilled water was added with a whole pipette, and the mixture was further heated and stirred for 10 minutes. After cooling for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. In a 100 mL eggplant-shaped flask, 5 mL of the acetylation reagent, 10 mL of toluene, and 2.5 mL of distilled water were placed, and heated and stirred for 10 minutes, followed by titration in the same way as above (blank test). On the basis of the results, the hydroxy value was calculated according to the following expression (I):

$$\text{Hydroxy value (mg-KOH/g)} = \{(b - a) \times 28.05 \times f\}/e \quad \ldots \text{(I)}$$

wherein a represents the amount (mL) of the sample titrated; b represents the amount (mL) titrated in the blank test; e represents the weight (g) of the sample; and f represents the factor of the titration solution.

The number-average molecular weight of polycarbonate diol was calculated according to the following expression (II) :

$$\text{Number-average molecular weight} = 2/(\text{OH value} \times 10^{-3}/56.11) \quad \ldots \text{(II)}$$

wherein the OH value represents the hydroxy value (mg-KOH/g).

(Alkali hydrolysis HDL/BDL)

The alkali hydrolysis HDL/BDL was calculated as follows.

In a 100 mL eggplant-shaped flask, 1 g of a sample was placed, and 30 g of ethanol and 4 g of potassium hydroxide were further placed, and the mixture was reacted at 100°C for 1 hour. After cooling to room temperature, to the eggplant-shaped flask, 2 to 3 drops of phenolphthalein were added as an indicator, and the mixture was neutralized with hydrochloric acid. The eggplant-shaped flask was cooled in a refrigerator for 1 hour. Then, precipitated salts were removed by filtration, and the resultant was analyzed by gas chromatography. The concentration of each dihydroxy compound was calculated in terms of % by weight from an area ratio obtained by preparing in advance a calibration curve from each dihydroxy compound known as a standard substance, and performing gas chromatography (GC). The analysis was conducted using gas chromatography GC-14B (manufactured by Shimadzu Corp.) equipped with DB-WAX

(manufactured by J&W Scientific, Inc.) as a column and a hydrogen flame ionization detector (FID) as a detector. The heating profile of the column was 60°C kept for 5 minutes, which was then raised to 250°C at 10°C/min. The alkali hydrolysis HDL/BDL was determined by calculating the molar ratio of 1,6-hexanediol to 1,4-butanediol from the obtained area values.

For example, as a result of alkali hydrolysis, when the diols are 1,6-hexanediol (52 mol%) and 1,4-butanediol (48 mol%), the alkali hydrolysis HDL/BDL is 52/48 = 1.08.

((C-E)/(B-E) calculated by NMR)

In the polycarbonate diol of the present embodiment, the molar ratio (C-E)/(B-E) between the terminal groups represented by formula (C-E) and the terminal groups represented by formula (B-E) was measured by nuclear magnetic resonance (NMR) as follows.

$^1$H-NMR device: ECS400 (manufactured by JEOL RESONANCE Inc.)
Observed nucleus (frequency): 1H (400 MHz)
Solvent: $CDCl_3$
Concentration: 5 wt/vol%
Shift reference: TMS (0.00 ppm)
The number of accumulation: 256

In the above-mentioned measurement, the integrated values of the following signals were divided by the numbers of hydrogen atoms, and each molar ratio was calculated from the values.

The specific calculating method was as follows. Amount of terminal groups represented by formula (B-E): Integrated value near 3.65 to 3.70 ppm (peak of bb in following formula B-1)/2
Amount of terminal groups represented by formula (C-E): Integrated value near 3.60 to 3.65 ppm (peak of cc in following formula C-1)/2

bb

$$-A-O-CH_2-CH_2-CH_2-CH_2-OH \quad \cdots (B-1)$$

wherein A means formula (A).

cc

$$-A-O-CH_2-CH_2-CH_2-CH_2-CH_2-CH_2-OH \quad \cdots (C-1)$$

wherein A means formula (A).

For example, as a result of NMR measurement, when the amount of the terminal groups represented by formula (B-E) is 1.00, and the amount of the terminal groups represented by formula (C-E) is 0.87, the (C-E)/(B-E) calculated by NMR is 0.87/1.00 = 0.87.

(Alkali hydrolysis HMD/LMD)

Analysis was performed by gas chromatography under the same conditions as in the above-mentioned measurement of alkali hydrolysis HDL/BDL to obtain the peak area values of HMD and LMD. The alkali hydrolysis HMD/LMD was determined by calculating the molar ratio of HMD to LMD from the obtained area values.

((c-e)/(b-e) calculated by NMR)

NMR measurement was performed under the same conditions as in the above-mentioned measurement of (C-E)/(B-E) calculated by NMR.

The integrated value of a peak derived from hydrogen atoms bound to a carbon atom adjacent to a terminal OH group was read from the obtained NMR chart, and the integrated value was divided by the number of hydrogen atoms to calculate the amount of the terminal groups represented by formula (c-e) and the amount of the terminal groups represented by formula (b-e). The (c-e)/(b-e) calculated by NMR was calculated by dividing the terminal groups represented by formula (c-e) by the amount of the terminal groups represented by formula (be) .

(Stability during storage at high temperature)

The polycarbonate diols obtained in Examples and Comparative Examples were used as samples. The reaction rates of the polycarbonate diols before tests on stability during storage at high temperature were determined by (Measurement of reaction rate) shown below. Further, the reaction rates of the samples after the samples were stored at 60°C for 1 to 5 months were measured again.
When the absolute value of the amount of change of the reaction rate was less than 1.0%, the absolute value was rated as ◎. When the absolute value was 1.0% or more and less than 2.0%, the absolute value was rated as O. When the absolute value was 2.0% or more and less than 3.0%, the absolute value was rated as Δ. When the absolute value was 3.0% or more, the absolute value was rated as ×.
For example, when the reaction rate before the test is 35.2%, and the reaction rate after the sample is stored at 60°C for 1 month is 35.4%, the absolute value of the amount of change of reaction rate is 135.4 - 35.2|/35.2 = 0.57%.

(Measurement of reaction rate)

[Provision of amine liquid]

A 0.2 N dibutylamine liquid was prepared using 25.85 g of dibutylamine and 865 g of toluene. Subsequently, 10 mL of the 0.2 N dibutylamine liquid was added to 10 g of dimethylformamide (DMF), and the mixture was stirred until the mixture was homogeneous, and an amine liquid was provided.

[Blank titration]

The above-mentioned amine liquid was titrated with 0.1 mol/L 2-propanol hydrochloride (manufactured by FUJIFILM Wako Pure Chemical Corporation) using bromocresol green as an indicator.

[Reaction rate evaluation]

First, 20 g of a sample and toluene were placed in a 200 mL four-necked eggplant-shaped flask so that the solid content was 30%. Then, a condenser was attached, and the mixture was warmed and stirred at 80°C. Subsequently, 4,4-diphenylmethane diisocyanate in advance warmed at 80°C so that NCO/OH = 2.00 was added to the eggplant-shaped flask, and the reaction was started. Next, approximately 5 mL of the reaction liquid 40 minutes after the reaction start was sampled and rapidly incorporated into the amine liquid, and the mixture was then stirred for 3 minutes. Subsequently, the reaction liquid was titrated with 0.1 mol/L 2-propanol hydrochloride (manufactured by FUJIFILM Wako Pure Chemical Corporation) using bromocresol green as an indicator. Based on this result, the OH reaction ratio determined by the following expression was calculated as a reaction rate.

$$\text{Remaining NCO (mol/g)} = (H - J)/1000 \times 0.1 \times F / W$$

H: Amount (mL) titrated in the blank test
J: Amount (mL) of reaction liquid titrated
W: Amount (g) sampled
F: Factor of titration solution
OH reaction ratio (%) = ((N1 - Ns)/01) × 100
N1: NCO groups (mol/g) of 4,4-diphenylmethane diisocyanate fed
Ns: Remaining NCO (mol/g) determined by the above-mentioned expression
O1: Hydroxy value of polycarbonate diol fed

[Example 1]

A 1 L glass flask (reactor) equipped with a rectifying column packed with a regular packing material, and a stirring apparatus was charged with 245 g of 1,4-butanediol, 240 g of 1,6-hexanediol, and 420 g of ethylene carbonate. Then, 0.11 g of titanium tetra-n-butoxide was placed therein as a catalyst. The reactor was dipped in an oil bath of 165°C. While a portion of the distillate was extracted, the mixture was reacted at a reaction temperature of 140 to 150°C for 18 hours. Subsequently, the reactor was connected directly to a condenser. The reaction temperature was raised to 185°C.

Then, the pressure was gradually lowered to 0.6 kPa, and the reaction was further performed for 5 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-1 (431 g), which is liquid at normal temperature.

The obtained polycarbonate diol PC-1 had a hydroxy value of 53.6 mg-KOH/g and a number-average molecular weight of 2094. In the obtained PC-1, the amount of the repeating units represented by formula (B) was 48.9 mol%, and the amount of the repeating units represented by formula (C) was 51.1 mol% based on the total repeating units represented by formula (A). Further, in the obtained PC-1, the amount of the terminal groups represented by formula (B-E) was 47.6 mol%, and the amount of the terminal groups represented by formula (C-E) was 52.4 mol% based on the total amount of the terminal groups.

The obtained PC-1 was evaluated according to the method described above. The evaluation results are described in Table 1.

[Comparative Example 1]

A 1 L glass flask (reactor) equipped with a rectifying column packed with a regular packing material, and a stirring apparatus was charged with 245 g of 1,4-butanediol, 240 g of 1,6-hexanediol, and 420 g of ethylene carbonate. Then, 0.13 g of titanium tetra-n-butoxide was placed therein as a catalyst. The reactor was dipped in an oil bath of 165°C. While a portion of the distillate was extracted, the mixture was reacted at a reaction temperature of 140 to 150°C for 18 hours. Subsequently, the reactor was connected directly to a condenser. The reaction temperature was raised to 170°C. Then, the pressure was gradually lowered to 1.0 kPa, and the reaction was further performed for 10 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-2 (422 g), which is liquid at normal temperature.

The obtained polycarbonate diol PC-2 had a hydroxy value of 54.3 mg-KOH/g and a number-average molecular weight of 2067. In the obtained PC-2, the amount of the repeating units represented by formula (B) was 49.3 mol%, and the amount of the repeating units represented by formula (C) was 50.7 mol% based on the total repeating units represented by formula (A). Further, in the obtained PC-2, the amount of the terminal groups represented by formula (B-E) was 53.8 mol%, and the amount of the terminal groups represented by formula (C-E) was 46.2 mol% based on the total amount of the terminal groups.

The obtained PC-2 was evaluated according to the method described above. The evaluation results are described in Table 1.

[Example 2]

A 3.0 L glass flask (reactor) equipped with a stirring apparatus was charged with 1487 g of DURANOL T4692 (manufactured by Asahi Kasei Corporation, a copolymeric polycarbonate diol wherein 1,4-butanediol and 1,6-hexanediol were used as diols, and the number-average molecular weight was approximately 2000; the diol composition ratio: 1,4-butanediol/1,6-hexanediol = 90 mol%/10 mol%) and 513 g of DURANOL T6002 (manufactured by Asahi Kasei Corporation, a polycarbonate diol wherein 1,6-hexanediol was used as a diol, and the number-average molecular weight was approximately 2000). Then, 0.13 g of titanium tetra-n-butoxide was placed therein as a catalyst. Subsequently, the mixture was heated with stirring, and kept at approximately 145°C in terms of the inside temperature of the reactor for 3 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-3. The progression and the like of transesterification reaction was confirmed by measuring the reaction solution over time by GPC, and confirming the disappearance of peaks derived from the starting materials and the appearance of a peak derived from a product over time.

The obtained polycarbonate diol PC-3 had a hydroxy value of 55.7 mg-KOH/g, and a number-average molecular weight of 2015. In the obtained PC-3, the amount of the repeating units represented by formula (B) was 68.0 mol%, and the amount of the repeating units represented by formula (C) was 32.0 mol% based on the total repeating units represented by formula (A). Further, in the obtained PC-3, the amount of the terminal groups represented by formula (B-E) was 63.2 mol%, and the amount of the terminal groups represented by formula (C-E) was 36.8 mol% based on the total amount of the terminal groups.

The obtained PC-3 was evaluated according to the method described above. The evaluation results are described in Table 1.

[Comparative Example 2]

A 1 L glass flask (reactor) equipped with a rectifying column packed with a regular packing material, and a stirring apparatus was charged with 330 g of 1,4-butanediol, 142 g of 1,6-hexanediol, and 430 g of ethylene carbonate. Then, 0.13 g of titanium tetra-n-butoxide was placed therein as a catalyst. The reactor was dipped in an oil bath of 165°C. While a portion of the distillate was extracted, the mixture was reacted at a reaction temperature of 140 to 150°C for 18 hours. Subsequently, the reactor was connected directly to a condenser. The reaction temperature was raised to 170°C. Then, the pressure was gradually lowered to 1.0 kPa, and the reaction was further performed for 10 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-4 (412 g), which is liquid at normal temperature.

The obtained polycarbonate diol PC-4 had a hydroxy value of 55.8 mg-KOH/g and a number-average molecular weight of 2011. In the obtained PC-4, the amount of the repeating units represented by formula (B) was 68.2 mol%, and the amount of the repeating units represented by formula (C) was 31.8 mol% based on the total repeating units represented by formula (A). Further, in the obtained PC-4, the amount of the terminal groups represented by formula (B-E) was 71.4 mol%, and the amount of the terminal groups represented by formula (C-E) was 28.6 mol% based on the total amount of the terminal groups.

The obtained PC-4 was evaluated according to the method described above. The evaluation results are described in Table 1.

[Example 3]

A 1.0 L glass flask (reactor) equipped with a stirring apparatus was charged with 358 g of DURANOL T4692 (manufactured by Asahi Kasei Corporation, a copolymeric polycarbonate diol wherein 1,4-butanediol and 1,6-hexanediol were used as diols, and the number-average molecular weight was approximately 2000; the diol composition ratio: 1,4-butanediol/1,6-hexanediol = 90 mol%/10 mol%) and 542 g of DURANOL T6002 (manufactured by Asahi Kasei Corporation, a polycarbonate diol wherein 1,6-hexanediol was used as a diol, and the number-average molecular weight was approximately 2000). Then, 0.10 g of titanium tetra-n-butoxide was placed therein as a catalyst. Subsequently, the mixture was heated with stirring, and kept at approximately 145°C in terms of the inside temperature of the reactor for 3 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-5. The progression and the like of transesterification reaction was confirmed by measuring the reaction solution over time by GPC, and confirming the disappearance of peaks derived from the starting materials and the appearance of a peak derived from a product over time.

The obtained polycarbonate diol PC-5 had a hydroxy value of 55.9 mg-KOH/g and a number-average molecular weight of 2007. In the obtained PC-5, the amount of the repeating units represented by formula (B) was 39.8 mol%, and the amount of the repeating units represented by formula (C) was 60.2 mol% based on the total repeating units represented by formula (A). Further, in the obtained PC-5, the amount of the terminal groups represented by formula (B-E) was 37.7 mol%, and the amount of the terminal groups represented by formula (C-E) was 62.3 mol% based on the total amount of the terminal groups.

The obtained PC-5 was evaluated according to the method described above. The evaluation results are described in Table 1.

[Example 4]

A 1.0 L glass flask (reactor) equipped with a stirring apparatus was charged with 561 g of DURANOL T4692 (manufactured by Asahi Kasei Corporation, a copolymeric polycarbonate diol wherein 1,4-butanediol and 1,6-hexanediol were used as diols, and the number-average molecular weight was approximately 2000; the diol composition ratio: 1,4-butanediol/1,6-hexanediol = 90 mol%/10 mol%) and 339 g of DURANOL T6002 (manufactured by Asahi Kasei Corporation, a polycarbonate diol wherein 1,6-hexanediol was used as a diol, and the number-average molecular weight was approximately 2000). Then, 0.11 g of titanium tetra-n-butoxide was placed therein as a catalyst. Subsequently, the mixture was heated with stirring, and kept at approximately 145°C in terms of the inside temperature of the reactor for 3 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-6. The progression and the like of transesterification reaction was confirmed by measuring the reaction solution over time by GPC, and confirming the disappearance of peaks derived from the starting materials and the appearance of a peak derived from a product over time.

The obtained polycarbonate diol PC-6 had a hydroxy value of 55.5 mg-KOH/g and a number-average molecular

weight of 2022. In the obtained PC-6, the amount of the repeating units represented by formula (B) was 60.0 mol%, and the amount of the repeating units represented by formula (C) was 40.0 mol% based on the total repeating units represented by formula (A). Further, in the obtained PC-6, the amount of the terminal groups represented by formula (B-E) was 55.0 mol%, and the amount of the terminal groups represented by formula (C-E) was 45.0 mol% based on the total amount of the terminal groups.

The obtained PC-6 was evaluated according to the method described above. The evaluation results are described in Table 1.

[Example 5]

A 1 L glass flask (reactor) equipped with a rectifying column packed with a regular packing material, and a stirring apparatus was charged with 200 g of 1,3-propanediol, 230 g of 1,10-decanediol, and 380 g of ethylene carbonate. Then, 0.18 g of titanium tetra-n-butoxide was placed therein as a catalyst. The reactor was dipped in an oil bath of 165°C. While a portion of the distillate was extracted, the mixture was reacted at a reaction temperature of 140 to 150°C for 18 hours. Subsequently, the reactor was connected directly to a condenser. The reaction temperature was raised to 185°C. Then, the pressure was gradually lowered to 0.6 kPa, and the reaction was further performed for 5 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-7 (388 g), which is liquid at normal temperature.

The obtained polycarbonate diol PC-7 had a hydroxy value of 54.8 mg-KOH/g and a number-average molecular weight of 2048. In the obtained PC-7, the amount of the repeating units represented by formula (b) was 45.7 mol%, and the amount of the repeating units represented by formula (c) was 54.3 mol% based on the total repeating units represented by formula (A). Further, in the obtained PC-7, the amount of the terminal groups represented by formula (b-e) was 43.3 mol%, and the amount of the terminal groups represented by formula (c-e) was 56.7 mol% based on the total amount of the terminal groups.

The obtained PC-7 was evaluated according to the method described above. The evaluation results are described in Table 1.

[Comparative Example 3]

A 3 L glass flask (reactor) equipped with a rectifying column packed with a regular packing material, and a stirring apparatus was charged with 550 g of 1,4-butanediol, 650 g of 1,6-hexanediol, and 970 g of ethylene carbonate. Then, 0.10 g of titanium tetra-n-butoxide was placed therein as a catalyst. The reaction temperature was adjusted to 150°C at a reduced pressure of 20 torr (approximately 2.67 kPa). While a portion of the distillate was extracted, the mixture was reacted for 20 hours. Subsequently, the reactor was connected directly to a condenser. The reaction temperature was raised to 190°C. Then, the pressure was gradually lowered to 7 torr (approximately 0.93 kPa), and the reaction was further performed for 4 hours. Subsequently, dibutyl phosphate was added in an amount of 2.0 times the molar ratio of titanium tetra-n-butoxide, and the mixture was heated at 115°C in terms of the inside temperature of the reactor for 3 hours to obtain a polycarbonate diol PC-8 (684 g), which is liquid at normal temperature.

The obtained polycarbonate diol PC-8 had a hydroxy value of 55.4 mg-KOH/g and a number-average molecular weight of 2025. In the obtained PC-8, the amount of the repeating units represented by formula (B) was 46.6 mol%, and the amount of the repeating units represented by formula (C) was 53.4 mol% based on the total repeating units represented by formula (A). Further, in the obtained PC-8, the amount of the terminal groups represented by formula (B-E) was 47.9 mol%, and the amount of the terminal groups represented by formula (C-E) was 52.1 mol% based on the total amount of the terminal groups.

The obtained PC-8 was evaluated according to the method described above. The evaluation results are described in Table 1.

[Table 1]

| Evaluation items | | Example 1 | Comparative Example 1 | Example 2 | Comparative Example 2 | Example 3 | Example 4 | Example 5 | Comparative Example 3 |
|---|---|---|---|---|---|---|---|---|---|
| | | PC-1 | PC-2 | PC-3 | PC-4 | PC-5 | PC-6 | PC-7 | PC-8 |
| (c-e)/(b-e) calculated by NMR | | 1.10 | 0.86 | 0.58 | 0.40 | 1.65 | 0.82 | 1.31 | 1.09 |
| Result of alkali hydrolysis | LMD | BDL | BDL | BDL | BDL | BDL | BDL | PRL | BDL |
| | | 48.9 mol% | 49.3 mol% | 68.0 mol% | 68.2 mol% | 39.8 mol% | 60.0 mol% | 45.7 mol% | 46.6 mol% |
| | HMD | HDL | HDL | HDL | HDL | HDL | HDL | DDL | HDL |
| | | 51.1 mol% | 50.7 mol% | 32.0 mol% | 31.8 mol% | 60.2 mol% | 40.0 mol% | 54.3 mol% | 53.4 mol% |
| | Alkali hydrolysis HMD/LMD | 1.04 | 1.03 | 0.47 | 0.46 | 1.51 | 0.67 | 1.19 | 1.15 |
| Result of stability during storage at high temperature | Reaction rate before test | 35.2% | 34.3% | 38.8% | 31.6% | 35.8% | 38.0% | 30.2% | 34.1% |
| | Reaction rate after storage for 1 month | 35.4% ◎ | 34.6% ◎ | 38.8% ◎ | 31.8% ◎ | 34.5% ◎ | 38.3% ◎ | 30.0% ◎ | 33.8% ◎ |
| | Reaction rate after storage for 2 months | 35.6% ○ | 35.1% △ | 39.4% ○ | 32.1% ○ | 36.2% ○ | 38.4% ○ | 30.3% ◎ | 34.8% △ |
| | Reaction rate after storage for 3 months | 34.8% ○ | 35.6% × | 39.5% ○ | 32.5% △ | 36.5% ○ | 38.5% ○ | 30.6% ○ | 35.1% △ |
| | Reaction rate after storage for 4 months | 35.6% ○ | 35.8% × | 39.3% ○ | 32.8% × | 36.5% ○ | 38.7% ○ | 30.8% ○ | 35.8% × |
| | Reaction rate after storage for 5 months | 35.8% ○ | 35.8% × | 39.8% △ | 33.2% × | 36.3% ○ | 38.7% ○ | 30.6% ○ | 35.8% × |
| PRL represents 1,3-propanediol, BDL represents 1,4-butanediol, HDL represents 1,6-hexanediol, and DDL represents 1,10-decanediol. | | | | | | | | | |

From these results, it was confirmed that the polycarbonate diols of the present Examples were excellent in stability during storage at high temperature.

Industrial Applicability

The polycarbonate diol of the present invention can be suitably used in a wide range of fields as a coating material for automobiles, buses, rail vehicles, building site equipment, agricultural machines, floors, walls, or roofs of architectures, metal products, mortar or concrete products, wood products, plastic products, and ceramics construction materials such as calcium silicate boards or plaster boards.

## Claims

1. A polycarbonate diol, comprising a repeating unit represented by the following formula (A) and a terminal hydroxyl group, wherein

    90 to 100 mol% of the repeating units represented by formula (A) are repeating units represented by the following formula (B) and/or (C),
    an amount of the repeating units represented by formula (B) is 10 to 90 mol% based on total repeating units represented by formula (A),
    90 mol% or more of a total amount of terminal groups is terminal groups represented by the following formula (B-E) and/or (C-E), and
    the polycarbonate diol satisfies the following expression (i):

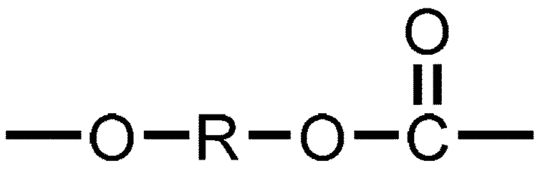

· · · (A)

wherein R represents a divalent aliphatic or alicyclic hydrocarbon having 2 to 15 carbon atoms,

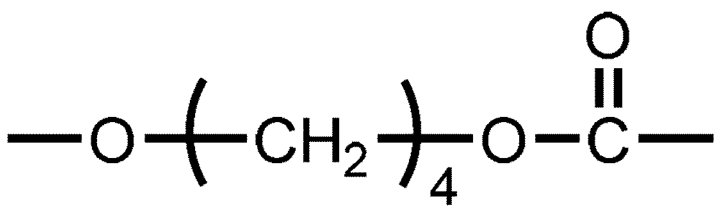

· · · (B)

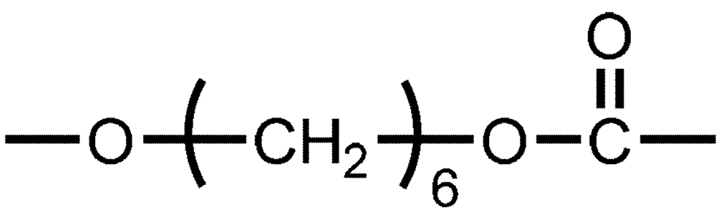

· · · (C)

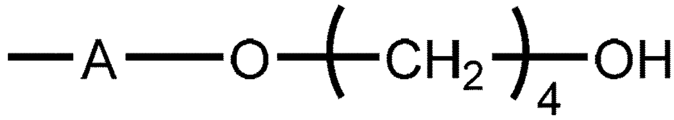

· · · (B−E)

wherein A means formula (A),

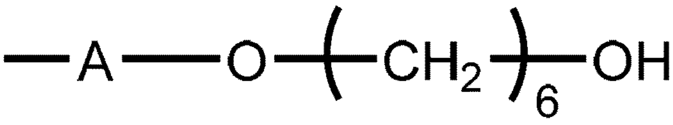 ···(C−E)

wherein A means formula (A),

((C-E)/(B-E) calculated by NMR) > (alkali hydrolysis HDL/BDL) (i)

wherein (C-E)/(B-E) calculated by NMR is a molar ratio between the terminal groups represented by formula (C-E) and the terminal groups represented by formula (B-E) measured by nuclear magnetic resonance (NMR), and alkali hydrolysis HDL/BDL is a molar ratio between 1,6-hexanediol (HDL) and 1,4-butanediol (BDL) obtained by alkali hydrolysis of the polycarbonate diol.

**2.** The polycarbonate diol according to claim 1, wherein the amount of the repeating units represented by formula (B) is 30 to 80 mol% based on the total repeating units represented by formula (A).

**3.** The polycarbonate diol according to claim 1, wherein the amount of the repeating units represented by formula (B) is 30 to 70 mol% based on the total repeating units represented by formula (A).

**4.** The polycarbonate diol according to claim 1, wherein the amount of the repeating units represented by formula (B) is 40 to 60 mol% based on the total repeating units represented by formula (A).

**5.** A polycarbonate diol, comprising a repeating unit represented by the following formula (A) and a terminal hydroxyl group, wherein

the repeating units represented by formula (A) are repeating units represented by the following formulae (b) and (c),
an amount of the repeating units represented by formula (b) is 10 to 60 mol% based on total repeating units represented by formula (A),
90 mol% or more of a total amount of terminal groups is terminal groups represented by the following formula (b-e) and/or (c-e), and
the polycarbonate diol satisfies the following expression (i-2):

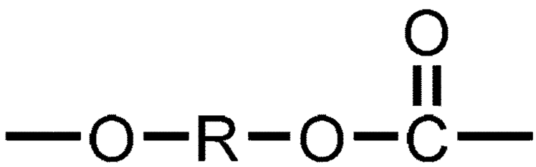 ···(A)

wherein R represents a divalent aliphatic or alicyclic hydrocarbon having 2 to 15 carbon atoms,

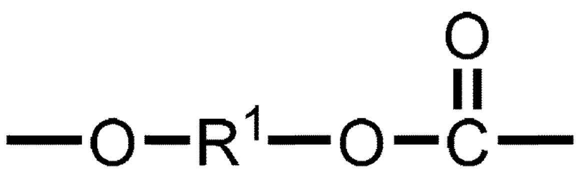 ···(b)

wherein $R^1$ represents a divalent aliphatic or alicyclic hydrocarbon having 2 to 4 carbon atoms,

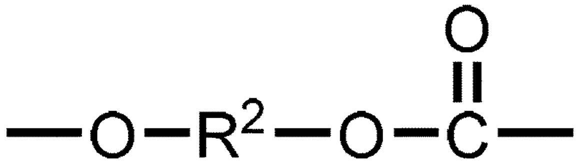 · · · (c)

wherein $R^2$ represents a divalent aliphatic or alicyclic hydrocarbon having 5 to 15 carbon atoms,

-A-O-$R^{11}$-OH ··· (b-e)

wherein A means formula (A), and $R^{11}$ represents a divalent aliphatic or alicyclic hydrocarbon having 2 to 4 carbon atoms,

-A-O-$R^{22}$-OH ··· (c-e)

wherein A means formula (A), and $R^{22}$ represents a divalent aliphatic or alicyclic hydrocarbon having 5 to 15 carbon atoms,

((c-e)/(b-e) calculated by NMR) > (alkali hydrolysis HMD/LMD) (i-2)

wherein (c-e)/(b-e) calculated by NMR is a molar ratio between the terminal groups represented by formula (c-e) and the terminal groups represented by formula (b-e) measured by nuclear magnetic resonance (NMR), and alkali hydrolysis HMD/LMD is a molar ratio between an aliphatic or alicyclic diol having 5 to 15 carbon atoms (HMD) and an aliphatic or alicyclic diol having 2 to 4 carbon atoms (LMD) obtained by alkali hydrolysis of the polycarbonate diol.

**6.** The polycarbonate diol according to claim 5, wherein the amount of the repeating units represented by formula (b) is 30 to 60 mol% based on the total repeating units represented by formula (A).

**7.** The polycarbonate diol according to claim 5, wherein the amount of the repeating units represented by formula (b) is 40 to 60 mol% based on the total repeating units represented by formula (A).

**8.** The polycarbonate diol according to any one of claims 5 to 7, wherein $R^1$ in formula (b) is a divalent aliphatic hydrocarbon group having 2 to 4 carbon atoms, and $R^{11}$ in formula (b-e) is a divalent aliphatic hydrocarbon group having 2 to 4 carbon atoms.

**9.** The polycarbonate diol according to any one of claims 5 to 8, wherein $R^2$ in formula (c) is a divalent aliphatic hydrocarbon group having 6 to 10 carbon atoms, and $R^{22}$ in formula (c-e) is a divalent aliphatic hydrocarbon group having 6 to 10 carbon atoms.

**10.** A polyurethane obtained using the polycarbonate diol according to any one of claims 1 to 9.

**11.** A coating material obtained using the polycarbonate diol according to any one of claims 1 to 9.

## Patentansprüche

**1.** Polycarbonatdiol, welches eine Wiederholungseinheit der folgenden Formel (A) und eine terminale Hydroxylgruppe aufweist, wobei

90 bis 100 Mol-% der Wiederholungseinheiten der Formel (A) Wiederholungseinheiten der folgenden Formel (B) und/oder (C) sind,
die Menge der durch die Formel (B) dargestellten Wiederholungseinheiten 10 bis 90 Mol-%, bezogen auf die gesamten durch die Formel (A) dargestellten Wiederholungseinheiten, beträgt,

90 Mol-% oder mehr der Gesamtmenge an Endgruppen solche Endgruppen sind, die durch die folgenden Formeln (B-E) und/oder (C-E) dargestellt werden, und
das Polycarbonatdiol den folgenden Ausdruck (i) erfüllt:

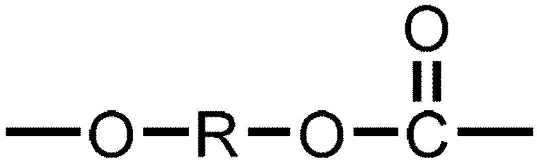

· · · (A)

wobei R einen zweibindigen aliphatischen oder alicyclischen Kohlenwasserstoff mit 2 bis 15 Kohlenstoffatomen darstellt,

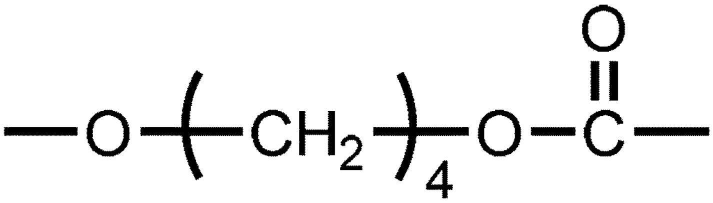

· · · (B)

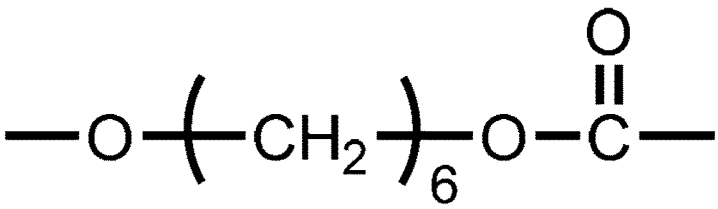

· · · (C)

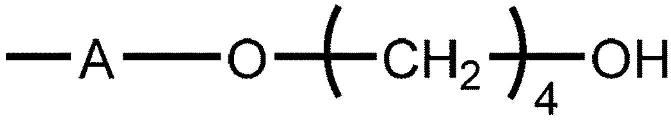

· · · (B − E)

wobei A die Formel (A) bedeutet,

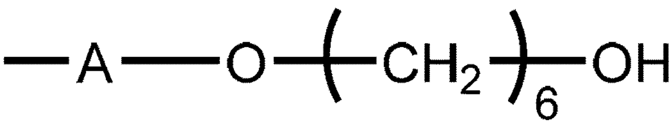

· · · (C − E)

wobei A die Formel (A) bedeutet,

((C-E)/(B-E), berechnet mittels NMR) > (Alkalihydrolyse-HDL/BDL) (i)

wobei (C-E)/(B-E), berechnet mittels NMR, das Molverhältnis zwischen den durch die Formel (C-E) dargestellten Endgruppen und den durch die Formel (B-E) dargestellten Endgruppen ist, gemessen durch Kernmagnetresonanz (NMR), und Alkalihydrolyse-HOLIBOL das Molverhältnis zwischen 1,6-Hexandiol (HDL) und 1,4-Butandiol (BDL) ist, erhalten durch Alkalihydrolyse des Polycarbonatdiols.

**2.** Polycarbonatdiol nach Anspruch 1, wobei die Menge der durch die Formel (B) dargestellten Wiederholungseinheiten 30 bis 80 Mol-%, bezogen auf die gesamten durch die Formel (A) dargestellten Wiederholungseinheiten, beträgt.

3. Polycarbonatdiol nach Anspruch 1, wobei die Menge der durch die Formel (B) dargestellten Wiederholungseinheiten 30 bis 70 Mol-%, bezogen auf die gesamten durch die Formel (A) dargestellten Wiederholungseinheiten, beträgt.

4. Polycarbonatdiol nach Anspruch 1, wobei die Menge der durch die Formel (B) dargestellten Wiederholungseinheiten 40 bis 60 Mol-%, bezogen auf die gesamten durch die Formel (A) dargestellten Wiederholungseinheiten, beträgt.

5. Polycarbonatdiol, welches eine Wiederholungseinheit der folgenden Formel (A) und eine terminale Hydroxylgruppe aufweist, wobei

90 bis 100 Mol-% der Wiederholungseinheiten der Formel (A) Wiederholungseinheiten der folgenden Formel (b) und/oder (c) sind,
die Menge der durch die Formel (b) dargestellten Wiederholungseinheiten 10 bis 60 Mol-%, bezogen auf die gesamten Wiederholungseinheiten der Formel (A), beträgt,
90 Mol-% oder mehr der Gesamtmenge an Endgruppen Endgruppen sind der folgenden Formeln (b-e) und/oder (c-e) sind, und
das Polycarbonatdiol den folgenden Ausdruck (i-2) erfüllt:

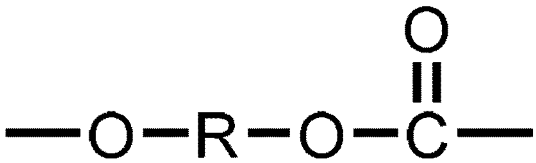

· · · (A)

wobei R einen zweibindigen aliphatischen oder alicyclischen Kohlenwasserstoff mit 2 bis 15 Kohlenstoffatomen darstellt,

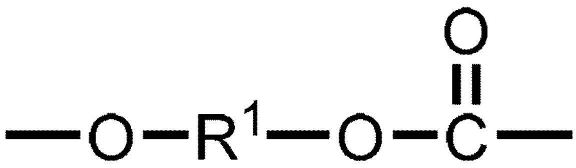

· · · (b)

wobei $R^1$ einen zweibindigen aliphatischen oder alicyclischen Kohlenwasserstoff mit 2 bis 4 Kohlenstoffatomen darstellt,

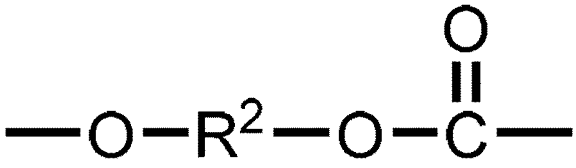

· · · (c)

wobei $R^2$ einen zweibindigen aliphatischen oder alicyclischen Kohlenwasserstoff mit 5 bis 15 Kohlenstoffatomen darstellt,

$-A-O-R^{11}-OH \cdots$ (b-e)

wobei A die Formel (A) bedeutet und $R^{11}$ einen zweibindigen aliphatischen oder alicyclischen Kohlenwasserstoff mit 2 bis 4 Kohlenstoffatomen darstellt,

$-A-O-R^{22}-OH \cdots$ (c-e)

wobei A die Formel (A) bedeutet und $R^{22}$ einen zweibindigen aliphatischen oder alicyclischen Kohlenwasserstoff mit 5 bis 15 Kohlenstoffatomen darstellt,

((c-e)/(b-e), berechnet mittels NMR) > (Alkalihydrolyse-HMD/LMD) (i-2)

wobei (c-e)/(b-e), berechnet mittels NMR, das Molverhältnis zwischen den durch die Formel (c-e) dargestellten Endgruppen und den durch die Formel (b-e) dargestellten Endgruppen ist, gemessen mittels Kernmagnetresonanz (NMR), und Alkalihydrolyse-HMD/LMD das Molverhältnis zwischen einem aliphatischen oder alicyclischen Diol mit 5 bis 15 Kohlenstoffatomen (HMD) und einem aliphatischen oder alicyclischen Diol mit 2 bis 4 Kohlenstoffatomen (LMD) ist, erhalten durch Alkalihydrolyse des Polycarbonatdiols.

**6.** Polycarbonatdiol nach Anspruch 5, wobei die Menge der durch Formel (b) dargestellten Wiederholungseinheit 30 bis 60 Mol-%, bezogen auf die gesamten Wiederholungseinheiten der Formel (A), beträgt.

**7.** Polycarbonatdiol nach Anspruch 5, wobei die Menge der durch Formel (b) dargestellten Wiederholungseinheiten 40 bis 60 Mol-%, bezogen auf die gesamten Wiederholungseinheiten der Formel (A), beträgt.

**8.** Polycarbonatdiol nach einem der Ansprüche 5 bis 7, wobei $R^1$ in Formel (b) eine zweibindige aliphatische Kohlenwasserstoffgruppe mit 2 bis 4 Kohlenstoffatomen ist und $R^{11}$ in Formel (b-e) eine zweibindige aliphatische Kohlenwasserstoffgruppe mit 2 bis 4 Kohlenstoffatomen ist.

**9.** Polycarbonatdiol nach einem der Ansprüche 5 bis 8, wobei $R^2$ in Formel (c) eine zweibindige aliphatische Kohlenwasserstoffgruppe mit 6 bis 10 Kohlenstoffatomen ist und $R^{22}$ in Formel (c-e) eine zweibindige aliphatische Kohlenwasserstoffgruppe mit 6 bis 10 Kohlenstoffatomen ist.

**10.** Polyurethan, welches unter Verwendung des Polycarbonatdiols nach einem der Ansprüche 1 bis 9 erhalten wurde.

**11.** Beschichtungsmaterial, welches unter Verwendung des Polycarbonatdiols nach einem der Ansprüche 1 bis 9 erhalten wurde.

## Revendications

**1.** Diol de polycarbonate, comprenant un motif répétitif représenté par la formule (A) suivante et un groupe hydroxyle terminal, dans lequel

90 à 100 % en moles des motifs répétitifs représentés par la formule (A) sont des motifs répétitifs représentés par la formule (B) et/ou (C) suivante,
une quantité des motifs répétitifs représentés par la formule (B) est de 10 à 90 % en moles sur la base des motifs répétitifs totaux représentés par la formule (A),
90 % en moles ou plus d'une quantité totale de groupes terminaux est des groupes terminaux représentés par la formule (B-E) et/ou (C-E) suivante, et
le diol de polycarbonate satisfait l'expression (i) suivante :

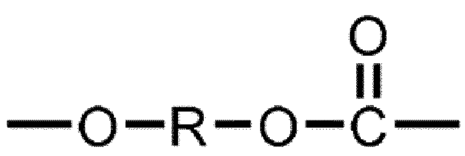

· · · (A)

dans lequel R représente un hydrocarbure aliphatique ou alicyclique divalent comportant 2 à 15 atomes de carbone,

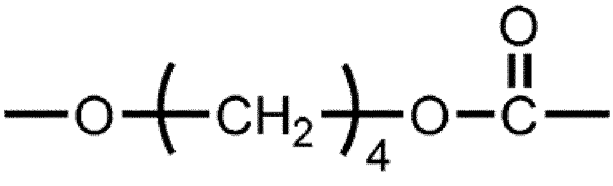

· · · (B)

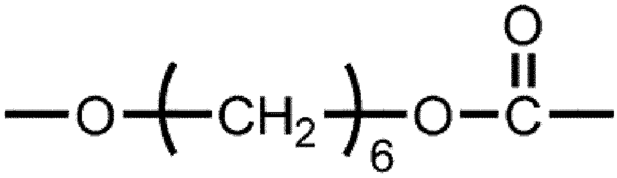

• • • (C)

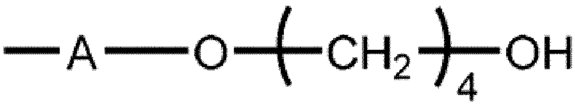

• • • (B−E)

dans lequel A désigne la formule (A),

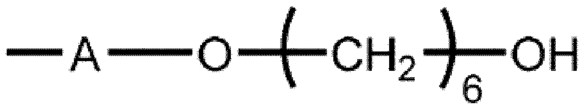

• • • (C−E)

dans lequel A désigne la formule (A),

((C-E)/(B-E) calculé par RMN) > (HDL/BDL par hydrolyse alcaline) (i)

dans lequel (C-E)/(B-E) calculé par RMN est un rapport molaire entre les groupes terminaux représentés par la formule (C-E) et les groupes terminaux représentés par la formule (B-E) mesurés par résonance magnétique nucléaire (RMN), et HDL/BDL par hydrolyse alcaline est un rapport molaire entre le 1,6-hexanediol (HDL) et le 1,4-butanediol (BDL) obtenus par hydrolyse alcaline du diol de polycarbonate.

**2.** Diol de polycarbonate selon la revendication 1, dans lequel la quantité des motifs répétitifs représentés par la formule (B) est de 30 à 80 % en moles sur la base des motifs répétitifs totaux représentés par la formule (A).

**3.** Diol de polycarbonate selon la revendication 1, dans lequel la quantité des motifs répétitifs représentés par la formule (B) est de 30 à 70 % en moles sur la base des motifs répétitifs totaux représentés par la formule (A).

**4.** Diol de polycarbonate selon la revendication 1, dans lequel la quantité des motifs répétitifs représentés par la formule (B) est de 40 à 60 % en moles sur la base des motifs répétitifs totaux représentés par la formule (A).

**5.** Diol de polycarbonate, comprenant un motif répétitif représenté par la formule (A) suivante et un groupe hydroxyle terminal, dans lequel

les motifs répétitifs représentés par la formule (A) sont des motifs répétitifs représentés par les formules (b) et (c) suivantes,
une quantité des motifs répétitifs représentés par la formule (b) est de 10 à 60 % en moles sur la base des motifs répétitifs totaux représentés par la formule (A),
90 % en moles ou plus d'une quantité totale de groupes terminaux est des groupes terminaux représentés par la formule (b-e) et/ou (c-e) suivante, et
le diol de polycarbonate satisfait l'expression (i-2) suivante :

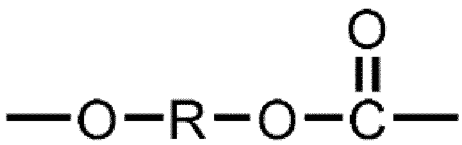

• • • (A)

dans lequel R représente un hydrocarbure aliphatique ou alicyclique divalent comportant 2 à 15 atomes de carbone,

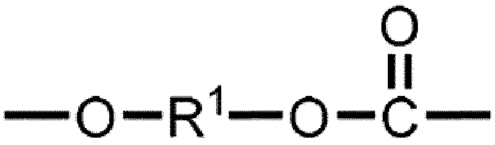

· · · (b)

dans lequel $R^1$ représente un hydrocarbure aliphatique ou alicyclique divalent comportant 2 à 4 atomes de carbone,

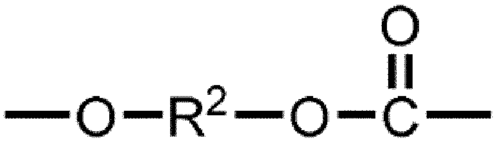

· · · (c)

dans lequel $R^2$ représente un hydrocarbure aliphatique ou alicyclique divalent comportant 5 à 15 atomes de carbone,

$-A-O-R^{11}-OH$ ··· (b-e)

dans lequel A désigne la formule (A), et $R^{11}$ représente un hydrocarbure aliphatique ou alicyclique divalent comportant 2 à 4 atomes de carbone,

$-A-O-R^{22}-OH$ ··· (c-e)

dans lequel A désigne la formule (A), et $R^{22}$ représente un hydrocarbure aliphatique ou alicyclique divalent comportant 5 à 15 atomes de carbone,

((c-e)/(b-e) calculé par RMN) > (HMD/LMD par hydrolyse alcaline) (i-2)

dans lequel (c-e)/(b-e) calculé par RMN est un rapport molaire entre les groupes terminaux représentés par la formule (c-e) et les groupes terminaux représentés par la formule (b-e) mesurés par résonance magnétique nucléaire (RMN), et HMD/LMD par hydrolyse alcaline est un rapport molaire entre un diol aliphatique ou alicyclique comportant 5 à 15 atomes de carbone (HMD) et un diol aliphatique ou alicyclique comportant 2 à 4 atomes de carbone (LMD) obtenus par hydrolyse alcaline du diol de polycarbonate.

**6.** Diol de polycarbonate selon la revendication 5, dans lequel la quantité des motifs répétitifs représentés par la formule (b) est de 30 à 60 % en moles sur la base des motifs répétitifs totaux représentés par la formule (A).

**7.** Diol de polycarbonate selon la revendication 5, dans lequel la quantité des motifs répétitifs représentés par la formule (b) est de 40 à 60 % en moles sur la base des motifs répétitifs totaux représentés par la formule (A).

**8.** Diol de polycarbonate selon l'une quelconque des revendications 5 à 7, dans lequel $R^1$ dans la formule (b) est un groupe hydrocarbure aliphatique divalent comportant 2 à 4 atomes de carbone, et $R^{11}$ dans la formule (b-e) est un groupe hydrocarbure aliphatique divalent comportant 2 à 4 atomes de carbone.

**9.** Diol de polycarbonate selon l'une quelconque des revendications 5 à 8, dans lequel $R^2$ dans la formule (c) est un groupe hydrocarbure aliphatique divalent comportant 6 à 10 atomes de carbone, et $R^{22}$ dans la formule (c-e) est un groupe hydrocarbure aliphatique divalent comportant 6 à 10 atomes de carbone.

**10.** Polyuréthane obtenu en utilisant le diol de polycarbonate selon l'une quelconque des revendications 1 à 9.

**11.** Matériau de revêtement obtenu en utilisant le diol de polycarbonate selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5123950 B
- JP H0551428 A